# EUROPÄISCHE PATENTSCHRIFT

(11) **EP 0 848 989 B1**
(45) Veröffentlichungstag und Bekanntmachung des Hinweises auf die Patenterteilung: **12.03.2003**
(21) Anmeldenummer: 97121154.5
(22) Anmeldetag: 02.12.1997
(51) Int. Cl.: B01J 19/24, B01J 19/00, B01J 12/00, B01J 4/00

(54) **Monolithischer Gleich- oder Gegenstromreaktor**
Monolithic co- or counter-current reactor
Réacteur monolithique à écoulement co-courant ou contre-courant

(30) Priorität: 21.12.1996 DE 19653989
(43) Veröffentlichungstag der Anmeldung: 24.06.1998
(73) Patentinhaber: Degussa AG, 40474 Düsseldorf (DE)
(72) Erfinder: von Hippel, Lukas Dr., 63755 Alzenau (DE); Arntz, Dietrich, Dr., Mobile, AL 36695, Degussa Corp. (US); Frauhamme, Jörg, 74376 Gemmringheim (DE); Eigenberger, Gerhart Prof. Dr., 67435 Neustadt (DE); Friedrich, Gerhard, 75428 Illingen (DE)

(56) Entgegenhaltungen:
- US-A- 3 860 535
- US-A- 5 032 365
- US-A- 5 106 590
- US-A- 5 112 578

## Beschreibung

Die Erfindung betrifft einen monolithischen Gleich- oder Gegenstromreaktor umfassend einen Reaktorkopf.

Gleich- oder Gegenstromreaktoren werden in der nicht vorveröffentlichten europäischen Patentanmeldung EP 0 752 390 A1 beschrieben.

Ein Gleich- oder Gegenstromreaktor hat die Form eines Zylinders von beliebiger Querschnittsfläche und wird von parallelen Strömungskanälen durchzogen, die die beiden Stirnflächen des Reaktors miteinander verbinden. Eine solche Vorrichtung wird gewöhnlich als Wabenkörper bezeichnet. Sie kann aus Metall oder Keramik gefertigt sein. Die Strömungskanäle können dreieckige, quadratische, rechteckige, sechseckige oder andere Querschnittsformen aufweisen. Die Anzahl der Strömungskanäle, bezogen auf die Querschnittsfläche, wird als Zelldichte bezeichnet.

In der EP 0 752 390 A1 wird ein solcher Wabenkörper für die Herstellung von Blausäure durch Umsetzung von Methan und Ammoniak in Gegenwart eines geeigneten Katalysators beschrieben. Die Umsetzung von Methan und Ammoniak ist eine endotherme Reaktion und wird bei Temperaturen von 1000 bis 1350°C durchgeführt.

Gemäß der EP 0 752 390 A1 werden die Strömungskanäle des Wabenkörpers in Heiz- und Reaktionskanäle unterteilt. Heizund Reaktionskanäle sind in einem komplementären Muster über den Querschnitt des Wabenkörpers verteilt. Das Verteilungsmuster der Kanäle kann im Prinzip beliebig gewählt werden. Bewährt hat sich jedoch eine abwechselnd lagen- oder reihenweise Anordnung von Heiz- und Reaktionskanälen.

Das Reaktionsgemisch aus Methan und Ammoniak wird durch die Reaktionskanäle geleitet. Im Gleich- oder Gegenstrom dazu wird ein Brenngas/Luft-Gemisch durch die Heizkanäle geführt und in den Kanälen zur Verbrennung gebracht. Durch die direkte Nachbarschaft von Heiz- und Reaktionskanälen wird die bei der Verbrennung freigesetzte Wärme mit hohem Wirkungsgrad auf die Reaktanden übertragen. Zur Durchführung der katalytischen Umsetzung sind die Innenwände der Reaktionskanäle mit einem Katalysator für die katalytische Umsetzung beschichtet.

Die Verbrennung in den Heizkanälen wird durch in die Kanäle eingeführte Heizdrähte gezündet. Die Zündung der Verbrennung in den Heizkanälen kann jedoch auch katalytisch vorgenommen werden. Hierzu werden die Innenwandflächen der Heizkanäle mit einem Katalysator für die katalytische Verbrennung beschichtet.

Ein wesentliches Problem des vorgestellten Reaktorkonzeptes stellt die Einspeisung der Reaktionsgase als auch der Verbrennungsgase in die jeweils zugeordneten Kanäle dar. Eine Möglichkeit der Einspeisung offenbart die US 4,271,110 für den Fall eines wabenförmigen indirekten Wärmetauschers. Unter der Voraussetzung, daß Heiz- und Reaktionskanäle abwechselnd in Lagen beziehungsweise Reihen angeordnet sind kann die Zu- und Abfuhr der Gase gemäß der US-Patentschrift wie folgt vorgenommen werden:

Das Brenngas/Luft-Gemisch wird einer Stirnfläche des Reaktors mit Hilfe eines auf die Stirnfläche aufgesetzten kegelförmigen Stutzens zugeführt. Das Reaktionsgemisch wird in entsprechender Weise der zweiten Stirnfläche zugeführt. Die Strömungskanäle sind auf der der jeweiligen Einspeisungs-Stirnfläche gegenüberliegenden Stirnfläche in axialer Richtung verschlossen, um eine Vermischung der beiden Gaströmungen zu verhindern. Die Ausspeisung der Gasströme wird über die Seitenflächen des Reaktors vorgenommen. Hierzu sind ausgehend von einer Seitenfläche Öffnungen in den Reaktor eingearbeitet, die alle Kanäle einer Lage miteinander verbinden. Durch Aufsetzen eines Gasstutzens auf die Seitenfläche des Reaktors können die aus den einzelnen Lagen austretenden Gasströme zusammengefaßt werden.

Diese Lösung des Gaszuführungsproblems ist wegen ihrer geringen Flexibilität unbefriedigend, da sie nur auf Reaktoren mit lagenweise angeordneten Heiz- und Reaktionskanälen angewendet werden kann. Außerdem hat sich gezeigt, daß die Verbrennung in den Kanälen eine unbefriedigende Stabilität aufweist.

Das US-Patent 5,112,578 zeigt einen Reaktor mit Strömungskanälen und einem Reaktorkopf mit zwei durch eine Wand voneinander getrennten, übereinanderliegenden Kammern. Von der oberen Kammer führen Rohre durch die Trennwand und untere Kammer in die am Boden der unteren Kammer angesetzten und mit ihrer über einen Ringspalt in Verbindung stehender Strömungsrohre.

Aufgabe der vorliegenden Erfindung ist es daher, eine Vorrichtung anzugeben, mit der Heiz- und Reaktionsgase in die entsprechenden Kanäle von Gleich- oder Gegenstromreaktoren eingeführt werden können, auch wenn Heiz- und Reaktionskanäle in einem beliebigen Muster über den Querschnitt des Reaktors angeordnet sind.

Diese Aufgabe wird gelöst durch einen monolithischen Gleich- oder Gegenstromreaktor, umfassend einen Reaktorkopf zur Ein- und Ausspeisung zweier durch die parallelen Strömungskanäle strömender fluider Medien I und II, wobei der Reaktor die Form eines Zylinders der Länge L hat und die parallelen Strömungskanäle die beiden Stirnflächen des Reaktors miteinander verbinden und Medium I durch einen ersten Satz der Strömungskanäle (7) und Medium II durch einen zweiten Satz der Strömungskanäle (9) strömt und wobei der Reaktorkopf zwei übereinander angeordnete Kammern (1, 2 bzw. 1' 2') mit einer gemeinsamen Trennwand aufweist. Erfindungsgemäß liegt die erste Kammer (1 bzw. 1') mit einer der gemeinsamen Trennwand gegenüberliegenden Außenwand (3 bzw 3') auf einer Stirnfläche des Reaktors (4) gasdicht auf.Es sind Führungsrohre (8, 6 bzw. 8' 6') vorgesehen, die in die Strömungskanäle des Reaktors (4) bis maximal zur Hälfte der Länge L des Reaktors eingeführt sind, wobei die Führungsrohre (6 bzw 6') des ersten Satzes der Strömungskanäle (7) in der ersten Kammer (1 bzw. 1') enden und die Führungsrohre (8 bzw 8') des zweiten Satzes der Strömungskanäle (9) durch die Kammer (1 bzw 1') und die gemeinsame Trennwand hindurchgeführt sind und in zweiten Kammer (2 bzw 2') enden. Die Kammern (1,2 bzw. 1'2') weisen ferner Anschlußleitungen (10, 11 bzw. 10'11') für die Zuund Ableitung für Medium I und Medium II auf.

Der erfindungsgemäße Reaktorkopf kann allgemein für die Einspeisung zweier fluider Medien in ihnen zugeordnete Strömungskanäle eines monolithischen Wabenkörpers verwendet werden. Den beiden Fluiden Medien sind im Wabenkörper zwei Sätze von Strömungskanälen zugeordnet, die in einem beliebigen Muster über den Querschnitt des Wabenkörpers angeordnet sein können. Eine Beschränkung auf eine lagenweise Anordnung der Kanäle entfällt. Für die Einspeisung beider Medien werden zwei Reaktorköpfe benötigt, die auf die gegenüberliegenden Stirnflächen des Reaktors dicht aufgesetzt werden.

Die Führungsrohre dienen der sicheren Einspeisung der fluiden Medien in die jeweiligen Kanäle. Ihre Eintauchlänge in die Kanäle kann je nach Erfordernis in weiten Grenzen frei gewählt werden. Bei Verwendung des Wabenkörpers als Gegenstromreaktor für endotherme katalytische Reaktionen kann durch geeignete Wahl der Eintauchlänge gewährleistet werden, daß kritische Prozesse erst tief im Innern des Reaktors ablaufen und somit eventuelle Dichtungen zwischen Reaktorkopf und Wabenkörper nicht zerstört werden. Als weitere Schutzmaßnahme kann derReaktorkopf durch einen ihn umgebenden Doppelmantel geschützt werden, durch den eine Kühlflüssigkeit gepumpt wird.

Die Eintauchlänge der Führungsrohre für die Reaktionsgase wird bevorzugt in den Grenzen zwischen 0 bis 10% der Länge des Reaktors gewählt. Die Führungsrohre für das Brenngas/Luft-Gemisch übernehmen zusätzlich die Funktion von Flammhalterrohren und gewährleisten somit eine stabile Verbrennung. Außerdem kann durch die Eintauchlänge der Ort, an dem die Verbrennung beginnt, vorbestimmt werden. Der bevorzugte Variationsbereich für die Eintauchlänge liegt in diesem Fall zwischen 0 und 50% der Länge L des Reaktors.

Der erfindungsgemäße Reaktorkopf ermöglicht es auch, Meßsonden in einzelne Kanäle des Reaktors einzuführen. Hierzu muß nur das entsprechende Führungsrohr durch beide Kammern hindurch nach außen geführt werden. Ein besonderer Vorteil des Reaktorkopfes ist die Tatsache, daß er die Einkopplung der beiden fluiden Medien in beliebig über den Reaktorquerschnitt verteilte Kanäle möglich macht.

Der Reaktorkopf kann aus unterschiedlichen Materialien gefertigt werden. Die tatsächlich Materialauswahl hängt von der geplanten Anwendung ab. Für die Auswahl bestimmend sind die zu handhabenden Medien und die während des Betriebs auftretenden Temperaturen und Drücke. Für die Synthese von Blausäure haben sich Reaktorköpfe aus rostfreiem Edelstahl bewährt. Die Führungsrohre, insbesondere die Flammhalterrohre, sind besonders starken thermischen Belastungen ausgesetzt. Neben Flammhalterrohren aus rostfreiem Edelstahl werden daher bevorzugt auch Flammhalterrohre aus keramischen Materialien verwendet. Zur schnellen und einfachen Auswechslung thermisch geschädigter Flammhalterrohre ist es zweckmäßig, die Rohre zweigeteilt mit einer Steckverbindung auszubilden. Die in den Reaktor eintauchenden Endstücke der Flammhalterrohre können dann erforderlichenfalls leicht ausgetauscht werden.

Die Erfindung wird an Hand der beiden Figuren weiter verdeutlicht. Es zeigen
- Figur 1:: Zeichnung eines erfindungsgemäßen Reaktorkopfes
- Figur 2:: Anordnung der Heiz- und Reaktionskanäle eines Gegenstromreaktors

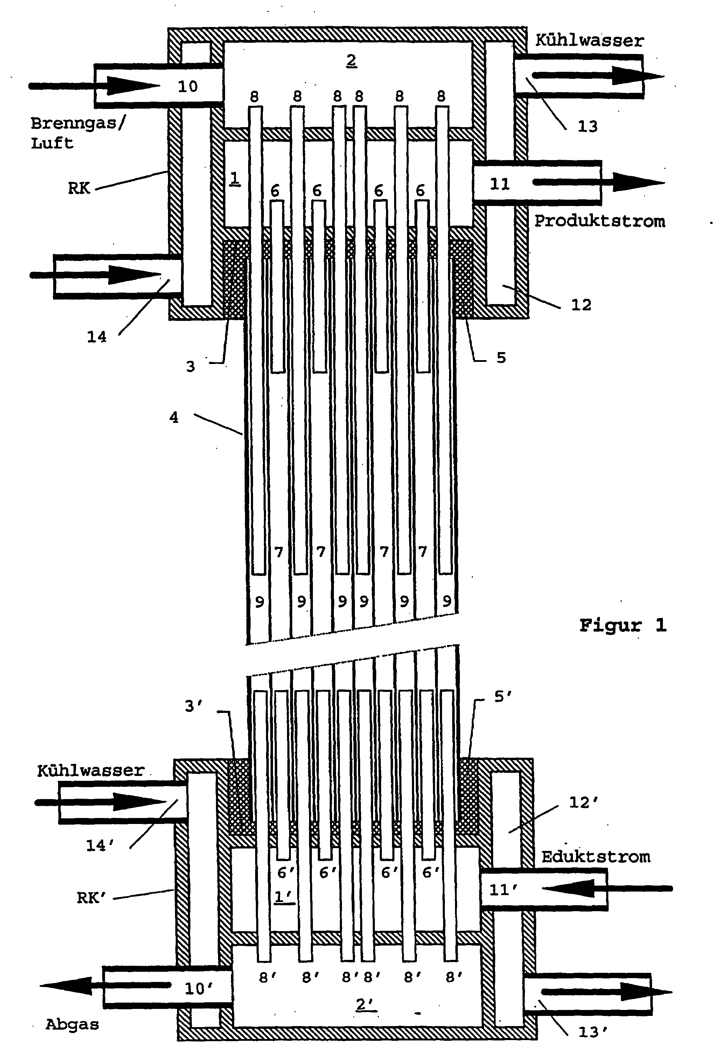

Figur 1 zeigt einen monolithischen Gegenstromreaktor 4 mit an den Stirnflächen aufgesetzten Reaktorköpfen RK und RK'.

Das Brenngas/Luft-Gemisch wird der Kammer 2 des Reaktorkopfes RK über den Stutzen 10 zugeführt. Aus der Kammer 2 gelangt das Brenngas/Luft-Gemisch über die Flammhalterrohre 8 in die Heizkanäle 9 des monolithischen Reaktors. Dort wird das Gemisch durch einen Verbrennungskatalysator, der sich als Beschichtung auf den Innenwänden der Heizkanäle befindet, katalytisch verbrannt. Die Abgase gelangen über die Führungsrohre 8' in die Kammer 2' des zweiten Reaktorkopfes RK' und werden über Stutzen 10' nach außen abgeführt.

Der Eduktstrom wird im Gegenstrom zum Brenngas/Luft-Gemisch durch den Reaktor geleitet. Hierzu wird der Eduktstrom über Stutzen 11' in die Kammer 1' eingeführt und mittels der Führungsrohre 6' in die Reaktionskanäle 7 des Reaktors eingespeist. Die Reaktionskanäle sind auf ihren Innenwänden mit einem Katalysator für die gewünschte katalytische Reaktion beschichtet. Der Katalysator bewirkt die Umsetzung des Eduktstromes in den Produktstrom, der über die Führungsrohre 6, Kammer 1 und Stutzen 11 ausgeschleust wird.

Beide Reaktorköpfe sind mit einem Kühlmantel 12 beziehunsweis 12' versehen. Das Kühlwasser wird über die Stutzen 14, 14' dem Kühlmantel 12, 12' zugeführt und über die Stutzen 13, 13' abgeführt. Die Reaktorköpfe sind mit den Außenwänden 3 beziehungsweise 3' der Kammern 1 beziehungsweise 1' gasdicht auf die Stirnfläche des Reaktors 4 aufgesetzt. 5 beziehungsweise 5' bezeichnen eine Dichtmasse. Hierbei kann es sich um einen Silikonkleber handeln, der gegenüber den an den Stirnflächen herrschenden Temperaturen von maximal 200°C beständig ist.

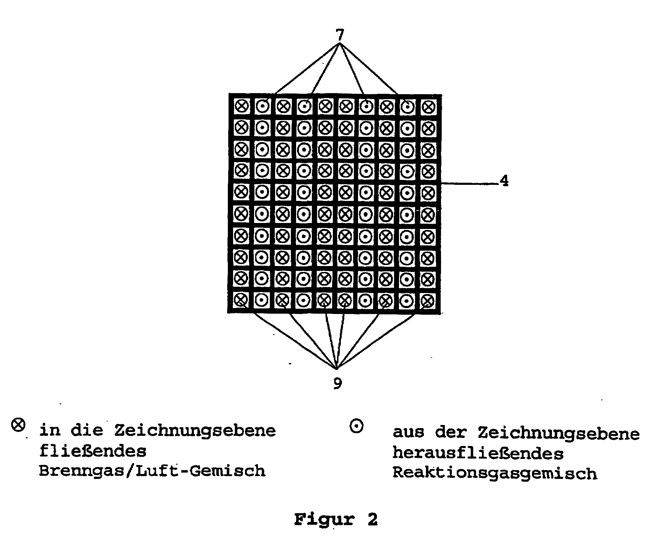

Figur 2 zeigt einen Querschnitt durch den monolithischen Gegenstromreaktor 4 mit den lagenweise angeordneten Heizgaskanälen 9 und Reaktionsgaskanälen 7. Der Reaktor ist aus einer gasdichten Aluminiumoxid-Keramik gefertigt.

## Patentansprüche

1. Monolithischer Gleich- oder Gegenstromreaktor umfassend einen Reaktorkopf zur Ein- und Ausspeisung zweier durch die parallelen Strömungskanäle strömender fluider Medien I und II, wobei der Reaktor die Form eines Zylinders der Länge L hat und die parallelen Strömungskanäle die beiden Stirnflächen des Reaktors miteinander verbinden und Medium I durch einen ersten Satz der Strömungskanäle (7) und Medium II durch einen zweiten Satz der Strömungskanäle (9) strömt, und wobei der Reaktorkopf zwei übereinander angeordnete Kammern (1,2 bzw. 1'2') mit einer gemeinsamen Trennwand aufweist
**dadurch gekennzeichnet,**
**dass** die erste Kammer (1 bzw. 1') des Reaktorkopfs mit einer der gemeinsamen Trennwand gegenüberliegenden Außenwand (3 bzw. 3') auf einer Stirnfläche des Reaktors (4) gasdicht aufliegt und Führungsrohre (8,6 bzw. 8'6') vorgesehen sind, die in die Strömungskanäle des Reaktors (4) bis maximal zur Hälfte der Länge L des Reaktors eingeführt sind, wobei die Führungsrohre (6 bzw 6')des ersten Satzes der Strömungskanäle (7) in der ersten Kammer (1 bzw. 1') enden und die Führungsrohre (8 bzw. 8') des zweiten Satzes der Strömungskanäle (9) durch die erste Kammer (1 bzw. 1') und die gemeinsame Trennwand hindurchgeführt sind und in der zweiten Kammer (2 bzw. 2') enden und daß Kammern (1, 2 bzw. 1' 2') Anschlußleitungen (10, 11 bzw. 10' 11') für die Zu- und Abfuhr des Mediums I und des Mediums II aufweisen.

2. Reaktor nach Anspruch 1,
**dadurch gekennzeichnet,**
**dass** die Mantelfläche des Reaktorkopfs (Rk bzw. Rk') als Doppelmantel (12 bzw. 12') ausgebildet ist, der eine Zu- (14 bzw. 14') und die Ableitung (13 bzw. 13') für ein Kühlmedium aufweist.

3. Reaktor nach Anspruch 1 oder 2,
**dadurch gekennzeichnet,**
**dass** auf beiden Stirnflächen des zylinderförmigen Reaktors ein zwei übereinander angeordnete Kammern (1,2 bzw. 1'2') mit einer gemeinsamen Trennwand umfassender Reaktorkopf zur Ein- und Ausspeisung zweier durch die parallelen Strömungskanäle strömender fluider Medien I und II angeordnet ist, wobei die erste Kammmer (1 bzw. 1') jedes Reaktorkopfs mit einer der gemeinsamen Trennwand gegenüberliegenden Außenwand (3 bzw. 3') auf jeweils einer Stirnfläche des Reaktors (4) gasdicht aufliegt und Führungsrohre (8,6 bzw. 8'6') vorgesehen sind, die in die Strbmungskanäle des Reaktors (4) bis maximal zur Hälfte der Länge L des Reaktors eingeführt sind, wobei die Führungsrohre (6 bzw. 6')des ersten Satzes der Strömungskanäle (7) jeweils in der ersten Kammer (1 bzw. 1') enden und die Führungsrohre (8 bzw. 8') des zweiten Satzes der Strömungskanäle (9) jeweils durch die erste Kammer (1 bzw. 1') und die jeweils gemeinsame Trennwand hindurchgeführt sind und in der jeweils zweiten Kammer (2 bzw. 2') enden und dass die Kammern (1, 2 bzw. 1' 2') Anschlußleitungen (10, 11 bzw. 10' 11') für die Zu- und Abfuhr des Mediums I und des Mediums II aufweisen.

## Claims

1. A monolithic co- or countercurrent reactor comprising a reactor head for the feeding in and out of two fluid media I and II flowing through the parallel flow channels, the reactor taking the form of a cylinder of the length L and the parallel flow channels connecting together the two end faces of the reactor and medium I flowing through a first set of flow channels (7) and medium II flowing through a second set of flow channels (9), and the reactor head comprising two superposed chambers (1, 2 or 1', 2') with a common partition wall,
**characterised in that**
the first chamber (1 or 1') of the reactor head lies with an outer wall (3 or 3') opposite the common partition wall in gas-tight manner on an end face of the reactor (4) and guide tubes (8, 6 or 8', 6') are provided which are introduced into the flow channels of the reactor (4) as far at most as half-way along the length L of the reactor, wherein the guide tubes (6 or 6') of the first set of flow channels (7) end in the first chamber (1 or 1') and the guide tubes (8 or 8') of the second set of flow channels (9) pass through the first chamber (1 or 1') and the common partition wall and end in the second chamber (2 or 2') and **in that** the chambers (1, 2 or 1', 2') comprise connecting lines (10, 11 or 10', 11') for supply and outlet of the medium I and the medium II.

2. A reactor according to claim 1,
**characterised in that**
the outer surface of the reactor head (Rk or Rk') takes the form of a double shell (12 or 12'), which comprises a supply line (14 or 14') and the discharge line (13 or 13') for a coolant.

3. A reactor according to claim 1 or claim 2,
**characterised in that**
a reactor head comprising two superposed chambers (1, 2 or 1', 2') with a common partition wall, for the feeding in and out of two fluid media I and II flowing through the parallel flow channels, is arranged on both the end faces of the cylindrical reactor, wherein the first chamber (1 or 1') of each reactor head lies with an outer wall (3 or 3') opposite the common partition wall in each case in gas-tight manner on an end face of the reactor (4) and guide tubes (8, 6 or 8', 6') are provided which are introduced into the flow channels of the reactor (4) as far at most as half-way along the length L of the reactor, wherein the guide tubes (6 or 6') of the first set of flow channels (7) end in each case in the first chamber (1 or 1') and the guide tubes (8 or 8') of the second set of flow channels (9) pass in each case through the first chamber (1 or 1') and the in each case common partition wall and end in the in each case second chamber (2 or 2') and **in that** the chambers (1, 2 or 1', 2') comprise connecting lines (10, 11 or 10', 11') for supply and outlet of the medium I and the medium II.

## Revendications

1. Réacteur monolithique à courant parallèle ou à contre-courant comportant une tête de réacteur pour l'introduction et l'évacuation de deux fluides I, II traversant des canaux de passage parallèles,
le réacteur ayant la forme d'un cylindre de longueur (L) et les canaux de passage parallèles reliant les deux surfaces frontales du réacteur,
le fluide I traversant un premier jeu de canaux de passage (7) et le fluide II un second jeu de canaux de passage (9), et
la tête de réacteur comportant deux chambres (1, 2 ou 1', 2') superposées avec une cloison commune,
**caractérisé en ce que**
la première chambre (1, 1') de la tête de réacteur est appliquée de manière étanche au gaz par une paroi extérieure (3, 3') opposée à la cloison commune contre une surface frontale du réacteur (4), et des tubes de guidage (8, 6 et 8', 6') pénètrent dans les canaux de passage du réacteur (4) jusqu'au maximum de la moitié de la longueur (L) du réacteur, dont les tubes de guidage (6, 6') du premier jeu de canaux de passage (7) se terminent dans la première chambre (1, 1'), et dont les tubes de guidage (8, 8') du second jeu de canaux de passage (9) traversent la première chambre (1, 1') et la cloison commune et se terminent dans la seconde chambre (2, 2'), et les chambres (1, 2 et 1', 2') comportent des conduites de branchement (10, 11 et 10', 11') pour l'alimentation et l'évacuation du fluide I et du fluide II.

2. Réacteur selon la revendication 1,
**caractérisé en ce que**
la surface enveloppe de la tête de réacteur (Rk, Rk') est sous la forme d'une double enveloppe (12, 12') qui comporte une conduite d'alimentation (14, 14') et une conduite d'évacuation (13, 13') pour le fluide de refroidissement.

3. Réacteur selon la revendication 1 ou 2,
**caractérisé en ce que**
sur les deux surfaces frontales du réacteur de forme cylindrique, il est prévu une tête de réacteur comprenant deux chambres (1, 2 ou 1', 2') superposées avec une cloison commune pour l'introduction et l'évacuation de deux fluides I, II traversant les canaux parallèles,
la première chambre (1, 1') de chaque tête de réacteur étant appliquée de manière étanche au gaz par une paroi extérieure (3, 3') opposée à la cloison commune contre une surface frontale respective du réacteur (4), et des tubes de guidage (8, 6 ou 8', 6') sont prévus pour passer dans les canaux de passage du réacteur (4) jusqu'au maximum la moitié de la longueur (L) du réacteur, les tubes de guidage (6, 6') du premier jeu de canaux de passage (7) se terminant chaque fois dans la première chambre (1, 1'), et les tubes de guidage (8, 8') du second jeu de canaux de passage (9) traversant chaque fois la première chambre (1, 1') et la cloison commune respective et se terminant dans la seconde chambre (2, 2') et,
les chambres (1, 2 ; 1', 2') comportent des conduites de branchement (10, 11 ; 10', 11') pour l'alimentation et l'évacuation du fluide I et du fluide II.
